# DEMANDE DE BREVET EUROPEEN

(11) **EP 0 542 649 A1**
(43) Date de publication de la demande: **19.05.1993**
(21) Numéro de dépôt: 92420407.6
(22) Date de dépôt: 10.11.1992
(51) Int. Cl.: B21C 37/12, B23D 21/00

(54) **Procédé pour couper un tuyau en feuillard agrafé hélicoidalement, à agrafage non bloqué**

(30) Priorité: 12.11.1991 FR 9114144
(71) Demandeur: TUBEST, F-02130 Fere en Tardenois (FR)
(72) Inventeur: Briand, Gérard, F-02130 Fere en Tardenois (FR)
(74) Mandataire: Guerre, Dominique

(57) **Abrégé**

L'invention concerne un procédé pour couper en feuillard agrafé hélicoïdalement, à agrafage non bloqué, du type comprenant au moins deux opérations, à savoir, une première opération qui consiste à effectuer au moins une découpe partielle du tuyau sur une longueur lui permettant de recouvrir autant de largeurs de spires que le tuyau comporte de feuillards, suivie d'une seconde opération qui consiste en une rotation relative des deux éléments à séparer et correspondant à leur dévissage.

Selon l'invention, d'une part, la découpe (12) est réalisée à la presse, en au moins un tronçon et, d'autre part, son contour est déterminé, en fonction de son inclinaison, de manière à éliminer toute pointe acérée aux extrémités tronçonnées des spires des deux éléments de tuyau.

## Description

La présente invention concerne un procédé pour couper un tuyau en feuillard agrafé hélicoïdalement, à agrafage non bloqué ou libre. Ce type de tuyau, souvent destiné aux installations industrielles et au gainage des cheminées, est généralement fabriqué à partir d'un ou plusieurs feuillards en métal ou autre matière, préformés, puis enroulés en spirale, les bords ou lèvres des spires successives s'agrafant les uns aux autres. La flexibilité d'un tel tuyau est, en général, obtenue par le jeu ménagé lors du sertissage de l'agrafe, mais elle peut, aussi, être obtenue, dans le cas des agrafes bloquées, par la déformation d'ondulations préformées dans le feuillard.

La présente invention ne vise que les tuyaux à agrafage sans blocage.

Actuellement, ce type de tuyau est coupé, le plus souvent, diamétralement, c'est-à-dire perpendiculairement à son axe, mais cette manière de procéder présente des inconvénients non négligeables :
1) Il est nécessaire d'arrêter les dernières spires de part et d'autre du sciage, pour éviter que, par un léger mouvement de dévissage des spires d'extrémité par rapport aux autres, le diamètre d'extrémité soit modifié. Cet arrêt des spires d'extrémité peut être réalisé, par exemple, par un point de soudure ou de brasure.
2) Du fait du faible angle d'inclinaison des spires par rapport au plan de coupe, ce procédé fait apparaître, sur chaque morceau, une pointe très acérée à l'extrémité des bandes de feuillard. Cette pointe peut occasionner des blessures, ou gêner l'assemblage ultérieur. Il est donc nécessaire de la couper, ce qui impose une opération supplémentaire.
3) Il subsiste des bavures sur l'ensemble de la coupe.

On connaît, toutefois, par le document FR-A-1 245 351, un procédé et une machine pour le tronçonnement de gaines métalliques flexibles selon lesquels la gaine est coupée obliquement, sous un angle de, par exemple, 30 à 45°, la coupe pouvant être poussée jusque vers le milieu du diamètre, de sorte qu'il suffit de tourner la gaine semi-sectionnée autour de son axe pour séparer les deux tronçons.

Dans ce document, il est précisé que, grâce à l'inclinaison de la coupe, le frottement de l'outil de coupe tend à pousser les extrémités de la spire sectionnée non plus suivant la direction de la spire mais, au contraire, avec une forte composante parallèle à l'axe de la gaine, contre la spire voisine.

Ce même document précise qu'il en résulte qu'il n'y a plus aucun inconvénient à employer une scie au lieu d'une meule, ce qui est exact. Cependant, que l'on utilise une scie ou une meule, l'opération de coupe engendre toujours la formation de bavures qui doivent être supprimées par une opération supplémentaire car elles risquent de blesser l'opérateur ou le manipulateur de la gaine ainsi coupée. En outre, une inclinaison de 30 à 45° de la découpe n'élimine pas la formation d'une pointe acérée dangereuse à chaque extrémité de la spire sectionnée.

La présente invention vise à remédier à ces inconvénients. A cet effet, selon son mode de mise en oeuvre le plus simple, le procédé qu'elle concerne et qui est du type précité comprenant au moins deux opérations, à savoir, une première opération qui consiste à effectuer au moins une découpe partielle du tuyau sur une longueur lui permettant de recouvrir autant de largeurs de spires que le tuyau comporte de feuillards, suivie d'une seconde opération qui consiste en une rotation relative des deux éléments à séparer et correspondant à leur dévissage, d'une part, la découpe est réalisée à la presse, en au moins un tronçon et, d'autre part, son contour est déterminé, en fonction de son inclinaison, de manière à éliminer toute pointe acérée aux extrémités tronçonnées des spires des deux éléments de tuyau.

La découpe à la presse présente l'avantage d'éliminer tout risque de formation de bavures dangereuses et de pollution par la limaille produite lors d'une opération d'enlèvement de ces bavures.

Suivant une forme d'exécution simple de l'invention, la découpe présente un contour rectangulaire très aplati et elle est orientée longitudinalement par rapport à l'axe du tuyau. Elle peut aussi être légèrement inclinée par rapport à cet axe de manière à être perpendiculaire aux spires et être, ainsi, la plus courte possible.

Suivant une variante d'exécution de l'invention, la découpe présente un contour cruciforme allongé, ou en Z, ou approximativement en Z, et elle est inclinée par rapport à l'axe longitudinal du tuyau de manière que chaque ligne de contact entre les spires sectionnées adjacentes coïncide avec un angle rentrant du contour de la découpe.

Suivant une autre variante d'exécution de l'invention, la découpe présente un contour en S inversé ou non, c'est-à-dire vu dans un miroir ou non, et elle est orientée longitudinalement par rapport à l'axe du tuyau, de manière que les bords latéraux arrondis de ses extrémités délimitent les extrémités libres des spires sectionnées du feuillard.

Ce procédé, très simple, assure la séparation des parties de tuyau coupées sans donner naissance à des pointes acérées ni à des bavures qui devraient, le plus souvent, être supprimées par la suite.

Ce mode de mise en oeuvre le plus simple du procédé de l'invention ne peut être envisagé que sous réserve que l'agrafe des lèvres de chaque feuillard soit suffisamment rigide pour assurer la non déformation des spires terminales des éléments séparés l'un de l'autre de ce tuyau.

Si tel n'est pas le cas, notamment si le feuillard utilisé est de faible épaisseur, suivant un mode de mise en oeuvre préféré de l'invention, le procédé qu'elle concerne comprend, outre les deux opérations précitées de découpe et de dévissage, une troisième opération qui doit être réalisée avant la deuxième et qui consiste à réaliser une liaison entre les deux bords ou lèvres superposés de l'agrafe de chaque feuillard, par écrasement de l'agrafe, emboutissage, poinçonnage, soudage ou collage, en deux points décalés l'un de l'autre d'un intervalle minimal d'environ une spire de cette agrafe et chevauchant l'emplacement de la découpe.

Lorsque le tuyau comporte plusieurs feuillards enroulés hélicoïdalement et agrafés l'un à l'autre, la découpe est avantageusement réalisée en autant de tronçons décalés angulairement qu'il y a de feuillards, la longueur de chaque tronçon lui permettant de sectionner une spire.

Lorsque la découpe est réalisée en plusieurs tronçons décalés angulairement, il est prévu autant de paires de points de liaison que de découpes et chaque découpe est située entre les deux points de liaison de la paire associée.

Suivant un mode avantageux de mise en oeuvre de l'invention, la troisième opération consistant à réaliser les points de liaison entre les deux lèvres superposées de l'agrafe de chaque feuillard est réalisée simultanément à la première opération qui consiste à réaliser la découpe. Ce mode d'exécution est plus avantageux puisque ces deux opérations sont effectuées à la presse et que rien ne s'oppose à ce que, pour un gain de temps, elles soient réalisées simultanément.

Chaque feuillard peut être en métal ou en résine synthétique tel qu'un polymère.

De toute façon, l'invention sera bien comprise à l'aide de la description qui suit, en référence au dessin schématique annexé illustrant les différentes opérations de ce procédé dans le cas où l'opération de réalisation des points de liaison est rendue nécessaire par l'insuffisance de tenue naturelle des spires de l'agrafe :
- Figure 1 est une vue partielle en perspective d'un segment de tuyau en feuillard agrafé hélicoïdalement, à agrafage non bloqué, sur lequel ont été réalisées les deux premières opérations préalables à sa séparation en deux éléments par dévissage, la découpe, dont le contour est rectangulaire très aplati, étant orientée longitudinalement par rapport à l'axe du tuyau ;
- Figure 2 est une vue de face en élévation montrant un tronçon de tuyau sur lequel ont été réalisées, simultanément et à la presse, les deux premières opérations de découpe et d'emboutissage ;
- Figure 3 est une vue similaire à figure 2 montrant les deux éléments de ce tuyau après leur séparation par dévissage d'environ un tour.
- Figures 4 et 5 sont des vues similaires à figures 2 et 3 illustrant une découpe dont le contour est cruciforme allongé ;
- Figures 6 et 7 d'une part, et 8 et 9 d'autre part, sont des vues similaires aux figures 2 et 3 montrant une découpe, respectivement, en Z et approximativement en Z ;
- Figures 10 et 11 sont des vues similaires aux figures 2 et 3 montrant une découpe en forme de S inversé ;
- Figures 12 et 13 sont des vues similaires aux figures 2 et 3 illustrant le cas d'un tuyau comportant deux feuillards enroulés hélicoïdalement et agrafés, sur lequel ont été pratiquées deux découpes décalées angulairement.

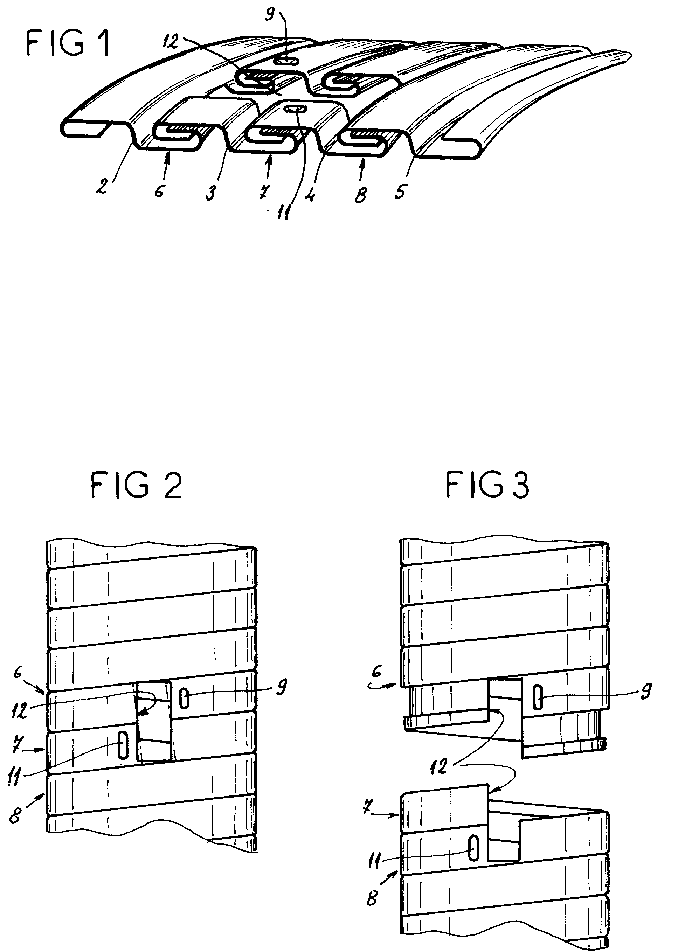

Comme le montre la figure 1, le tuyau auquel est destiné le procédé de coupe selon l'invention est du type constitué par un seul feuillard enroulé en spirale avec agrafage hélicoïdal des lèvres adjacentes et sertissage de l'agrafe mais sans blocage, c'est-à-dire de façon à laisser subsister un jeu procurant à ce tuyau la flexibilité nécessaire à sa mise en place.

Le segment partiel du tuyau représenté sur la figure 1 comporte quatre spires successives référencées 2 à 5, liées entre elles par un agrafage hélicoïdal dont on ne voit que trois spires référencées 6 à 8.

Le tronçon de tuyau représenté sur les figures 2 et 3 comportent un plus grand nombre de spires que celui représenté sur la figure 1.

Le procédé de l'invention consiste à réaliser, d'une part, une liaison mécanique, en deux points 9 et 11, décalés l'un par rapport à l'autre d'une distance légèrement supérieure à une spire de l'agrafe 8, entre les deux lèvres superposées du feuillard au niveau de cette agrafe.

Dans l'exemple illustré sur le dessin, cette liaison est réalisée par emboutissage.

Comme indiqué précédemment, les deux points de liaison 9 et 11 sont réalisés au voisinage des extrémités d'une même spire de l'agrafe de manière à ménager entre eux un intervalle suffisant pour l'emplacement d'une découpe 12, de contour rectangulaire aplati, orientée longitudinalement par rapport à l'axe du tuyau et s'étendant sur au moins une largeur du feuillard constituant ce tuyau. Cette découpe 12 est réalisée à la presse de manière à éviter la formation de bavures.

Sur le segment du tuyau représenté sur la figure 1 ainsi que sur le tronçon de tuyau représenté sur la figure 2, ces deux opérations d'emboutissage et de découpe ont été réalisées.

Il est normalement possible de réaliser ces deux opérations dans un ordre quelconque, mais, de préférence, pour gagner du temps, elles sont réalisées simultanément. Cependant, impérativement, l'emboutissage est réalisé avant l'opération décrite ci-après visant à séparer les deux éléments du tuyau, de manière à assurer une liaison par blocage des spires terminales de ces deux éléments.

Une fois les opérations d'emboutissage en 9 et 11 et de découpe en 12 réalisées, les deux éléments de ce tuyau peuvent être séparés l'un de l'autre par dévissage d'un tour de l'un ou l'autre de ses deux éléments.

La figure 3 montre les deux éléments du tuyau de figure 2 après leur séparation.

Comme cela ressort très nettement de l'examen de la figure 3, on voit que les emboutis 9 et 11 assurent un blocage parfait de la dernière spire de chacun de ses deux éléments puisque chacun d'eux assure le blocage de l'agrafe à l'endroit où il est réalisé.

Comme le montre en outre l'examen de la figure 3, le procédé de l'invention permet de réaliser cette coupe sans déformation des spires du tuyau, sans obligation ultérieure de couper une pointe acérée et sans obligation ultérieure de supprimer des bavures puisque la simple opération de réalisation de la découpe 12 peut facilement être effectuée à la presse, au moyen d'une matrice et d'un poinçon, sans aucun risque de formation de bavures.

Dans l'exemple illustré sur le dessin et comme indiqué précédemment, la découpe 12 est de forme rectangulaire aplatie et elle est réalisée longitudinalement c'est-à-dire parallèlement à l'axe de tronçon de tuyau qui doit être séparé en deux éléments. Naturellement, cette disposition de la découpe 12 qui permet l'utilisation d'un outillage rectiligne et par conséquent simple, peu onéreux et utilisable avec tous les diamètres de tuyau, n'est pas obligatoire. Elle pourrait aussi, tout en étant obligatoirement réalisée entre les points de blocage 9 et 11 de l'agrafe, être légèrement inclinée par rapport à l'axe longitudinal du tuyau et, notamment, orientée perpendiculairement aux spires du feuillard, comme illustré en traits mixtes sur la figure 2. Un telle inclinaison de la découpe 12 présente l'avantage de permettre de réduire au maximum sa longueur.

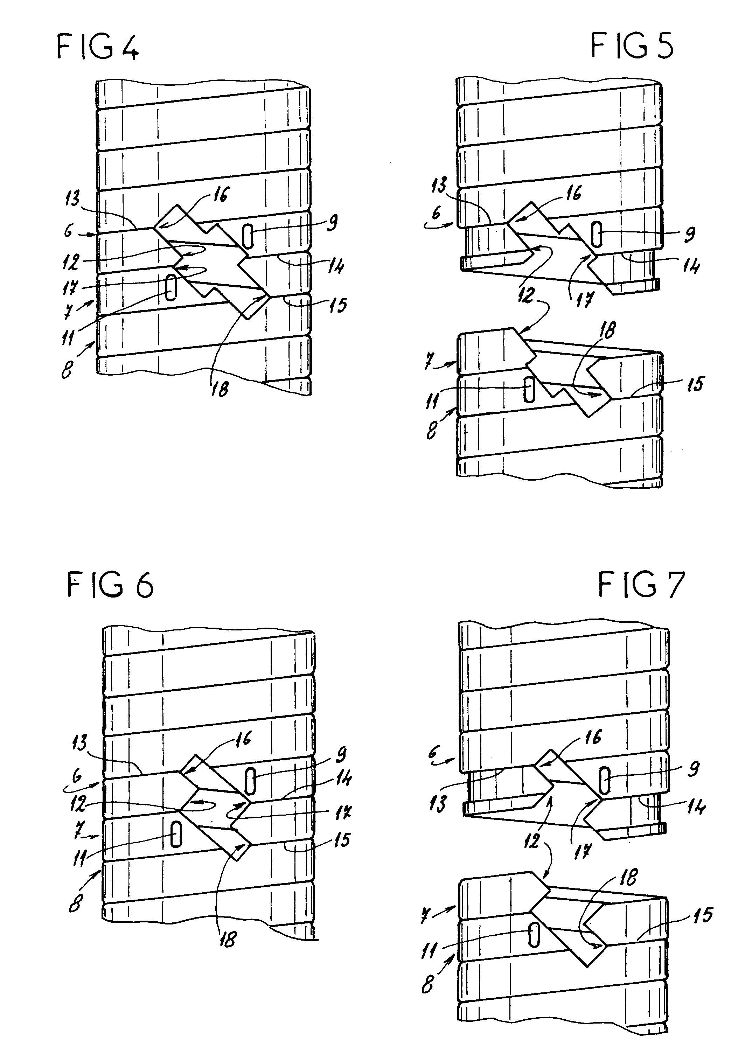

Les figures 4 à 11 illustrent quatre autres formes possibles de la découpe 12 sans que ces quatre autres formes soient limitatives.

Sur ces figures, on a utilisé les mêmes références que sur les figures 1 à 3 pour désigner les parties de tuyau qui se correspondent.

Dans l'exemple des figures 4 et 5, le contour de la découpe 12 est cruciforme allongé tandis que dans les exemples illustrés par les figures 6 et 7 d'une part, et 8 et 9 d'autre part, il est, respectivement, en Z et approximativement en Z.

Dans tous les cas, comme on peut le voir à l'examen de ces figures, la découpe 12 est inclinée par rapport à l'axe longitudinal du tuyau de manière que chaque ligne de contact entre les spires sectionnées adjacentes, comme par exemple les lignes 13, 14 et 15, coïncide avec un angle rentrant, respectivement 16, 17 et 18, du contour de la découpe 12.

Les figures 5, 7 et 9 montrent parfaitement que grâce à cette disposition, les extrémités sectionnées de la spire terminale de chaque élément du tuyau ne présentent aucun angle vif.

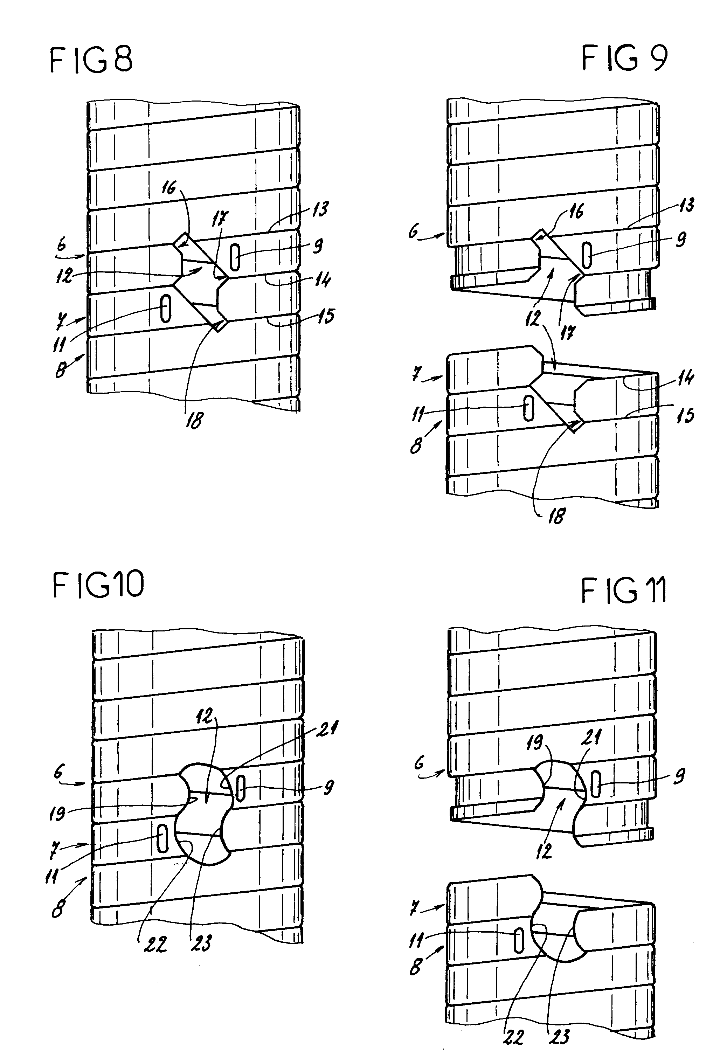

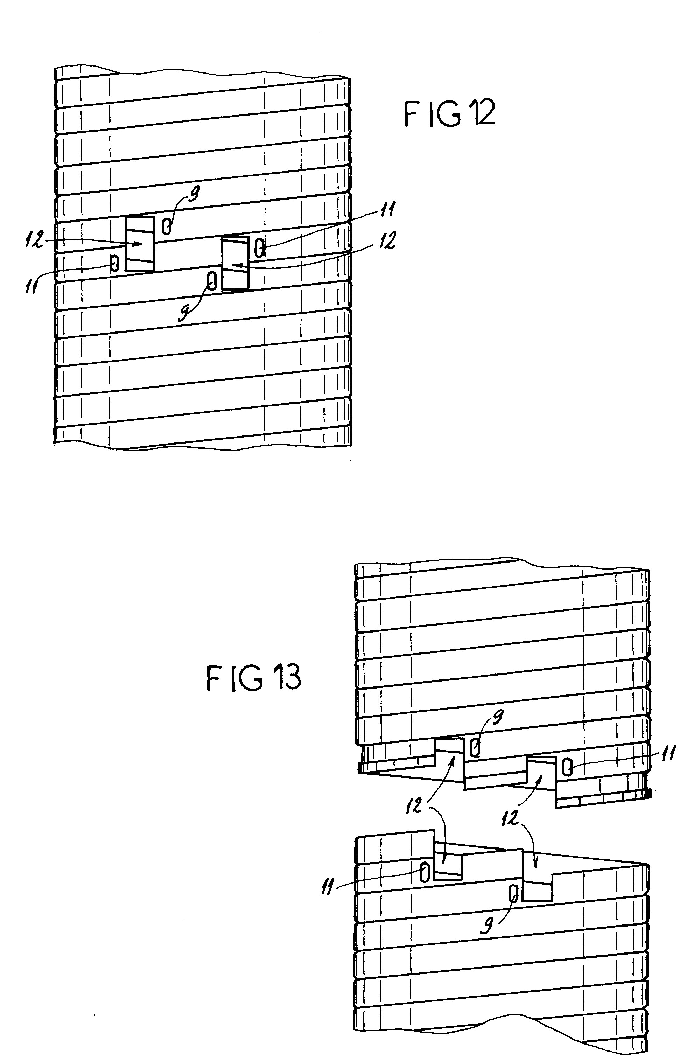

Dans l'exemple illustré par les figures 10 et 11, la découpe 12 présente un contour en S inversé, c'est-à-dire en S vu dans un miroir, et cette découpe est orientée longitudinalement par rapport à l'axe du tuyau de telle sorte que les bords latéraux arrondis 19 à 23 de ses extrémités délimitent les extrémités libres des spires terminales sectionnées des deux éléments de tuyau comme on peut le voir parfaitement sur la figure 11, qui montre ces deux éléments après leur séparation.

Cette forme du contour de la découpe 12, comme celle illustrée par les figures précédentes, présente donc l'avantage d'éviter toute formation d'angles vifs de pointes acérées aux extrémités libres des spires terminales de chaque élément de tuyau.

Dans tous les exemples précédemment décrits, le tuyau est réalisé à partir d'un seul feuillard enroulé hélicoïdalement à spires jointives et, pour cette raison, les découpes 12 sont prévues en un seul tronçon.

Comme indiqué précédemment, lorsque le tuyau est réalisé à partir de plusieurs feuillards adjacents, il est avantageux de prévoir une découpe 12 par feuillard.

Les figures 12 et 13 illustrent un tuyau réalisé à partir de deux feuillards et dans lequel ont été pratiquées deux découpes 12 angulairement décalées l'une par rapport à l'autre.

Naturellement, la longueur de chaque découpe 12 est suffisante pour lui permettre de sectionner transversalement une spire de ce tuyau et, par conséquent, cette longueur est au moins égale à la largeur d'une spire.

Naturellement, lorsqu'il est nécessaire de prévoir des points de liaison 9 et 11 par emboutissage ou autre similaire, il est prévu autant de paires de points de liaison 9 et 11 que de découpes 12, c'est-à-dire que de feuillards différents enroulés hélicoïdalement.

Il a été indiqué précédemment que le tuyau auquel s'applique ce procédé est réalisé à partir d'un feuillard métallique mais il est évident qu'il pourrait tout aussi bien s'appliquer à des tuyaux réalisés à partir des feuillards en une autre matière, comme par exemple un polymère et dans ce cas, les points de liaison 9 et 11 pourraient être réalisés par un soudage ou déformation à chaud.

## Revendications

1. Procédé pour couper un tuyau en feuillard agrafé hélicoïdalement, à agrafage non bloqué, du type comprenant au moins deux opérations, à savoir, une première opération qui consiste à effectuer au moins une découpe partielle du tuyau sur une longueur lui permettant de recouvrir autant de largeurs de spires que le tuyau comporte de feuillards, suivie d'une seconde opération qui consiste en une rotation relative des deux éléments à séparer et correspondant à leur dévissage, **caractérisé en ce que** d'une part, la découpe (12) est réalisée à la presse, en au moins un tronçon et, d'autre part, son contour est déterminé, en fonction de son inclinaison, de manière à éliminer toute pointe acérée aux extrémités tronçonnées des spires des deux éléments de tuyau.

2. Procédé selon la revendication 1, caractérisé en ce que la découpe (12) présente un contour rectangulaire très aplati.

3. Procédé selon la revendication 2, caractérisé en ce que la découpe est orientée longitudinalement par rapport à l'axe du tuyau.

4. Procédé selon la revendication 2, caractérisé en ce que la découpe est légèrement inclinée par rapport à cet axe de manière à être perpendiculaire aux spires.

5. Procédé selon la revendication 1, caractérisé en ce que la découpe (12) présente un contour cruciforme allongé, ou en Z, ou approximativement en Z, et elle est inclinée par rapport à l'axe longitudinal du tuyau de manière que chaque ligne de contact (13, 14, 15) entre les spires sectionnées adjacentes coïncide avec un angle rentrant (16, 17, 18) du contour de la découpe (12).

6. Procédé selon la revendication 1, caractérisé en ce que la découpe (12) présente un contour en S inversé ou non, c'est-à-dire vu dans un miroir ou non, et elle est orientée longitudinalement par rapport à l'axe du tuyau, de manière que les bords latéraux arrondis (19, 21, 22, 23) de ses extrémités délimitent les extrémités libres des spires sectionnées du feuillard.

7. Procédé selon l'une quelconque des revendications 2 à 6, caractérisé en ce qu'il comprend, outre les deux opérations précitées de découpe et de dévissage, une troisième opération qui doit être réalisée avant la deuxième et qui consiste à réaliser une liaison entre les deux bords ou lèvres superposés de l'agrafe de chaque feuillard, par écrasement de l'agrafe, emboutissage, poinçonnage, soudage ou collage, en deux points (9, 11) décalés l'un de l'autre d'un intervalle minimal d'environ une spire de cette agrafe et chevauchant l'emplacement de la découpe (12).

8. Procédé selon l'une des revendications 1 et 6, caractérisé en ce que, lorsque le tuyau comporte plusieurs feuillards enroulés hélicoïdalement et agrafés l'un à l'autre, la découpe (12) est réalisée en autant de tronçons décalés angulairement qu'il y a de feuillards, la longueur de chaque tronçon lui permettant de sectionner une spire.

9. Procédé selon les revendications 7 et 8, caractérisé en ce qu'il est prévu autant de paires de points de liaison (9, 11) que de découpes (12) et chaque découpe (12) est située entre les deux points de liaison (9, 11) de la paire associée.

10. Procédé selon l'une quelconque des revendications 7 à 9, caractérisé en ce que la troisième opération consistant à réaliser les points de liaison (9, 11) entre les deux lèvres superposées de l'agrafe de chaque feuillard est réalisée simultanément à la première opération qui consiste à réaliser la découpe (12).

11. Procédé selon l'une quelconque des revendications 1 à 10, caractérisé en ce que chaque feuillard est en métal ou en matière synthétique.
